# EUROPÄISCHE PATENTSCHRIFT

(11) **EP 4 404 031 B1**
(45) Veröffentlichungstag und Bekanntmachung des Hinweises auf die Patenterteilung: **02.09.2026**
(21) Anmeldenummer: 23152002.4
(22) Anmeldetag: 17.01.2023
(51) Int. Cl.: G06F 3/01, H04L 12/18, H04M 3/56, H04N 7/15, H04L 51/10

(54) **VERBESSERUNG DER NUTZBARKEIT EINES VIRTUELLEN RAUMES**
ENHANCING THE UTILITY OF A VIRTUAL SPACE
AMÉLIORATION DE L'UTILITÉ D'UN ESPACE VIRTUEL

(43) Veröffentlichungstag der Anmeldung: 24.07.2024
(73) Patentinhaber: Deutsche Telekom AG, 53113 Bonn (DE)
(72) Erfinder: SPEICH, Jan, 53757 Sankt Augustin (DE)
(74) Vertreter: Maucher Jenkins Patent- und Rechtsanwälte

(56) Entgegenhaltungen:
- US-A1- 2022 116 582
- US-A1- 2022 139 056

## Beschreibung

Die Erfindung betrifft eine Lösung zur Verbesserung der Nutzbarkeit eines virtuellen Raumes für einen sich darin (virtuell) bewegenden, eine elektronische Brille, nämlich eine VR-Brille oder eine AR-Brille tragenden Nutzer. Sie bezieht sich hierbei auf eine Verbesserung der dem Nutzer ermöglichten Erfassung ihm in dem virtuellen Raum über die elektronische-Brille dargebotener Informationen. Insbesondere soll für den Nutzer die Erfassbarkeit entsprechender Informationen für den Fall ermöglicht werden, dass sich in dem Raum andere, für den Nutzer wahrnehmbare virtuelle Entitäten, das heißt virtuelle Objekte und/oder durch einen Avatar repräsentierte Lebewesen, wie weitere mit einer elektronischen Brille ausgestattete Nutzer, befinden. Gegenstände der Erfindung sind ein entsprechendes Verfahren und ein zur Durchführung dieses Verfahrens geeignetes System.

Techniken zur Nutzung einer virtuellen Realität oder einer um Elemente der virtuellen Realität erweiterten tatsächlichen, das heißt physischen Realität sind bereits seit einiger Zeit im Einsatz, wobei der Grad der Durchdringung aller Bereiche des gesellschaftlichen Lebens, aber insbesondere der Arbeitswelt und des Arbeitslebens, weiter stark ansteigt. Dies geht bis hin zu Forschungen und Entwicklungen zur Schaffung eines sogenannten Metaverse, einer digitalen Umgebung, in welcher durch das Zusammenwirken von virtueller Realität, erweiterter Realität und physischer Realität die Grenzen zwischen Virtuellem und Tatsächlichem teilweise "verschwimmen".

Personen, respektive Nutzer, welche derartige Techniken verwenden möchten, bedienen sich hierfür spezieller VR-Einrichtungen, deren zentrales Element eine VR-Brille oder AR-Brille (bei der an dieser Stelle erfolgenden Darstellung des Standes der Technik wird im Weiteren vereinfachend nur noch auf eine VR-Brille Bezug genommen) ist. Die vorgenannten Einrichtungen umfassen neben der VR-Brille, an welcher Elemente der virtuellen Realität für deren Träger visualisiert werden, computertechnische Mittel, welche die VR-Brille zur geeigneten Visualisierung dieser Elemente ansteuern. Je nach Entwicklungsstand und Ausstattung können die letztgenannten Mittel zum Beispiel als integraler Bestandteil der VR-Brille oder durch ein computertechnisches Endgerät, respektive ein Mobilgerät, ausgebildet sein, welches mit der VR-Brille zur Übertragung von Daten vorzugsweise über eine Nahfunkverbindung verbunden ist.

Eine Ausprägungsform der zuvor geschilderten Entwicklungen stellen Bestrebungen dar, insbesondere in der Arbeitswelt das Zusammentreffen mehrerer Personen zunehmend von einer physischen Ebene auf eine virtuelle Ebene zu verlagern, wobei sich die Personen nicht mehr tatsächlich, sondern in einem virtuellen Raum treffen. Forciert werden diese Bestrebungen unter anderem auch durch eine einerseits stark gestiegene Arbeitsteiligkeit, in deren Rahmen Personen an unterschiedlichen Standorten zusammenarbeiten, sowie durch ein andererseits stärker gewachsenes Umweltbewusstsein und die diesem Bewusstsein Rechnung tragende Verringerung arbeitsbedingter Reisetätigkeit. Auch bei der Realisierung virtueller Zusammenkünfte mehrerer Personen (Multiuser Events) sind die einzelnen hieran teilnehmenden Nutzer jeweils mit einer eine VR-Brille umfassenden VR-Einrichtung ausgestattet.

Darüber hinaus wird zu einem solche virtuellen Treffen ermöglichenden System typischerweise ein Server gehören, durch welchen Daten zur Abbildung eines virtuellen, von den Teilnehmern des Treffens genutzten Raumes generiert und an die VR-Einrichtungen der einzelnen Nutzer zur Visualisierung an der jeweils von ihnen getragenen Brille übertragen werden. Ein an einem solchen Treffen teilnehmender Nutzer blickt in den rechentechnisch erzeugten virtuellen Raum hinein und kann sich dabei virtuell, nämlich durch sensorische Auswertung von Bewegungen einzelner seiner Körperteile, wie beispielsweise Kopf, Arme und Beine, in diesem Raum bewegen.

Andere an einem solchen virtuellen Treffen teilnehmende Personen/Nutzer nimmt der jeweilige Nutzer innerhalb des ihm visualisierten virtuellen Raumes als diese Personen vertretende Avatare wahr. Neben dem virtuellen Raum und den Avataren anderer Teilnehmer sowie sich in dem Raum befindenden Objekten werden einem Nutzer/Teilnehmer eines virtuellen Treffens im Allgemeinen in dem virtuellen Raum unterschiedliche Informationen dargeboten. Hierbei kann es sich beispielsweise auch um durch andere Teilnehmer an einem Whiteboard oder dergleichen dargebotene Präsentationen handeln.

Bewegt sich der Nutzer nun während des virtuellen Treffens in dem virtuellen Raum, so kann es im Zuge der durch den Server erfolgenden Rückspiegelung des daraus jeweils für ihn resultierenden Anblicks des Raumes geschehen, dass Informationen, welche der Nutzer erfassen möchte, durch den Avatar eines anderen Teilnehmers oder durch ein sich in dem virtuellen Raum befindendes Objekt teilweise oder vollständig verdeckt wird. Jedoch kann es wünschenswert sein, dass für einen Teilnehmer/Nutzer besonders wichtige Informationen von diesem unabhängig von seiner jeweiligen virtuellen Position in dem virtuellen Raum sowie von der Position der Avatare anderer sich in dem Raum bewegender Teilnehmer oder in dem Raum platzierter Objekte stets wahrzunehmen sind.

In der US 2022/139 056 A1 werden eine virtuelle Informationstafel und ein Verfahren für den kollaborativen Informationsaustausch. In diesem Zusammenhang wird auch die Frage der Verdeckung auf einer solchen virtuellen Informationstafel dargestellter Informationen durch als Avatare visualisierte Nutzer des Verfahrens thematisiert. Zur Lösung hierdurch entstehender Probleme wird vorgeschlagen, dass innerhalb des Sichtfelds einer durch einen Nutzer getragenen VR-Brille entweder alle Avatare oder durch den die Brille tragenden Nutzer ausgewählte Avatare anderer Nutzer transparent dargestellt werden. Die jeweilige aktuelle räumliche Lage des dem Nutzer durch die VR-Brille gegebenen Sichtfelds wird dabei ausgehend von dessen durch Eye Tracking ermittelter Blickrichtung bestimmt.

Eine ähnliche Vorgehensweise, nämlich sich innerhalb des Sichtfelds eines ersten Nutzers befindende Avatare anderer Nutzer transparent darzustellen, wird auch in der US 2022/116 582 A1 beschrieben.

Aufgabe der Erfindung ist es, eine alternative Lösung für ein noch realitätsnäheres Nutzungserlebnis bereitzustellen, die es dem Nutzer eines virtuellen Raumes ermöglicht, bestimmte darin dargebotene Informationen unabhängig von seiner jeweiligen aktuellen virtuellen Position und von anderen sich im Raum befindenden Entitäten, nämlich Objekten oder sich ebenfalls im Raum bewegenden Personen, wahrnehmen zu können. Hierzu sind ein Verfahren anzugeben und ein zur Durchführung dieses Verfahrens geeignetes System zu charakterisieren.

Die Aufgabe wird durch ein Verfahren mit den Merkmalen des Patentanspruchs 1 gelöst. Ein die Aufgabe lösendes, zur Durchführung des Verfahrens geeignetes System wird durch den unabhängigen Sachanspruch charakterisiert.

Ein virtueller Raum, auf den sich die vorgeschlagene Lösung bezieht, wird durch eine computertechnische Einrichtung und eine von dieser verarbeitete Programmanwendung generiert. Dabei erzeugte, den virtuellen Raum und die darin darzubietenden Informationen beschreibende Daten werden von dieser computertechnischen Einrichtung an eine VR-Einrichtung mit einer von einem Nutzer des virtuellen Raumes getragenen elektronischen Brille übergeben und durch die elektronische Brille für diesen Nutzer visualisiert. Bei der elektronischen Brille, welche eine VR-Einrichtung des Nutzers ausbildet oder von einer solchen VR-Einrichtung umfasst ist, handelt es sich um eine VR-Brille oder um eine AR-Brille.

Der vorstehenden Charakterisierung der elektronischen Brille liegt dabei ein Verständnis zugrunde, nach welchem diese zum einen so beschaffen sein kann, dass sie ausschließlich zur Visualisierung digitaler Daten, nämlich insbesondere eines virtuellen Raumes und darin dargebotener Informationen, vorgesehen ist, wobei ein sie tragender Nutzer seine Umgebung durch die Brille hindurch nicht wahrnimmt (VR-Brille). Oder die Brille ist so beschaffen, dass sie Brillengläser aufweist, durch welche hindurch der sie tragende Nutzer seine Umgebung wahrnehmen kann, wobei ihm zusätzlich virtuelle Inhalte an den Innenflächen der Brillengläser visualisiert werden können (AR-Brille).

Je nach ihrer technischen Ausgestaltung und Komplexität, nämlich je nach dem Integrationsgrad ihrer technischen Komponenten, kann die zuvor angesprochene VR-Einrichtung des die Brille tragenden Nutzers vollständig durch die Brille realisiert sein. Dies meint insbesondere, dass die Brille neben optischen und/oder optoelektronischen Komponenten selbst computertechnische Komponenten zur Ausführung von Programmanwendungen und zur umfangreicheren Verarbeitung digitaler Daten umfasst. Davon abweichend kann die elektronische Brille (VR-Brille oder AR-Brille) aber auch lediglich Bestandteil einer VR-Einrichtung sein, welche neben der elektronischen Brille ein mit dieser interagierendes (mobiles) computertechnisches Endgerät (Companion-Gerät) umfasst. Im letztgenannten Fall sind die elektronische Brille und das computertechnische Endgerät zum Austausch von Daten typischerweise durch eine Kurzstreckenfunkverbindung, wie beispielsweise Bluetooth oder NFC (Near Field Communication), miteinander verbunden. Selbstverständlich ist aber auch eine leitungsgebundene Verbindung zwischen beiden Komponenten grundsätzlich möglich.

Im Falle einer Implementierung des Verfahrens zur Nutzung eines virtuellen Raumes durch lediglich einen Nutzer kann die vorstehend genannte, die Programmanwendung zur Erzeugung des virtuellen Raumes ausführende computertechnische Einrichtung auch Bestandteil der VR-Einrichtung des Nutzers, respektive gegebenenfalls auch der entsprechend hochintegrierten, von dem Nutzer getragenen elektronischen Brille sein. Dies ist letztlich auch der Grund dafür, dass im Zusammenhang mit der Darstellung des Grundprinzips der Lösung davon gesprochen wird, dass die den virtuellen Raum und die darin darzubietenden Informationen beschreibenden Daten von der computertechnischen Einrichtung an die VR-Einrichtung des Nutzers übergeben werden.

Im Falle einer vollständig integrativen Lösung, bei welcher die besagte computertechnische Einrichtung Bestandteil der VR-Einrichtung oder, je nach Sichtweise, die VR-Einrichtung Bestandteil der computertechnischen Einrichtung ist, handelt es sich nämlich insoweit lediglich um Softwareschnittstellen, über welche entsprechende Daten von den sie erzeugenden Programmteilen an sie zur Visualisierung an der elektronischen Brille verarbeitende Programmteile übergeben werden. Im Gegensatz dazu werden, bei dem später noch anzusprechenden Fall einer Ausbildung der computertechnischen Einrichtung als eine zentrale, Daten mit mehreren VR-Einrichtungen von Nutzern austauschende Einrichtung (zum Beispiel Server), teilweise auch Daten (zum Beispiel initiale Daten zur Ansicht eines virtuellen Raumes) von einer solchen zentralen Einrichtung über ein Kommunikationsnetz, vorzugsweise über Funk, an die VR-Einrichtungen über eine größere Distanz hinweg übergeben, das heißt übertragen.

Das zur Lösung der Aufgabe vorgeschlagene Verfahren ist nun so gestaltet, dass durch die Übergabe entsprechender Parameter an die von der computertechnischen Einrichtung verarbeitete Programmanwendung ausgewählte, in dem virtuellen Raum dargebotene Informationen mit einem Präferenzkennzeichen verknüpft werden. Durch den Begriff des Präferenzkennzeichens wird hierbei zum Ausdruck gebracht, dass entsprechend gekennzeichneten Informationen innerhalb des virtuellen Raumes bei der Visualisierung an der elektronischen Brille des Nutzers, respektive eines Nutzers, Vorrang eingeräumt wird. Gemäß dem Verfahren sind Informationen, welche mit einem solchen Präferenzkennzeichen versehen sind, sofern sie, aufgrund der aktuellen virtuellen Position des Nutzers in dem virtuellen Raum, durch eine sich in dem virtuellen Raum befindende virtuelle Entität (durch ein virtuelles Objekt oder durch ein von einem Avatar repräsentiertes Lebewesen) teilweise oder vollständig verdeckt sind, durch diese sie verdeckende virtuelle Entität hindurch erfassbar.

Zur Umsetzung des zuvor Erläuterten wird durch die von der VR-Einrichtung eines sich in dem virtuellen Raum bewegenden Nutzers verarbeitete Programmanwendung zwischen einem eine mit einem Präferenzkennzeichen verknüpfte Information umgebenden (gedachten) Rechteck oder Quadrat und der Position des Nutzers (im virtuellen Raum), für welchen diese Informationen sichtbar bleiben sollen, ein nicht sichtbares, trapezförmiges virtuelles Prisma erzeugt. Für alle in dem virtuellen Raum durch die Programmanwendung innerhalb dieses virtuellen Prismas detektierten, respektive rechnerisch ermittelten virtuellen Entitäten wird dann durch eine transparente oder semitransparente Darstellung dieser virtuellen Entitäten bewirkt, dass die betreffende, mit dem Präferenzkennzeichen versehene Information für den Nutzer durch diese Entitäten hindurch wahrnehmbar ist.

Hierbei wird selbstverständlich das gesamte Szenario und somit das vorgenannte, mindestens eine virtuelle Prisma (gegebenenfalls gibt es auch mehrere solcher Prismen zu an verschiedenen Stellen in dem virtuellen Raum dargebotenen Informationen) fortwährend an die jeweils aktuelle Position des das Verfahren verwendenden Nutzers in dem virtuellen Raum angepasst. Das heißt, von der VR-Einrichtung des betreffenden Nutzers/Teilnehmers werden die für ihn resultierende Ansicht des virtuellen Raumes mit den darin enthaltenen virtuellen Entitäten und Informationen berechnet und diese Ansicht beschreibende Daten an die zugehörige elektronische Brille des Nutzers zur Visualisierung übergegeben. Dies schließt auch Daten für mindestens ein aktuelles, sich auf mit einem Präferenzkennzeichen versehene Informationen und die Position des betreffenden Nutzers beziehendes virtuelles Prisma und zu sich augenblicklich darin befindenden virtuellen Entitäten mit ein, wobei letztere transparent oder semi-transparent visualisiert werden.

In Abhängigkeit vom jeweiligen Einsatzfall und seiner damit verbundenen Umsetzung kann das Verfahren, welches vorstehend im Wesentlichen aus der Sicht eines Nutzers dargestellt wurde, so gestaltet sein, dass der Nutzer Teilnehmer eines in dem virtuellen Raum stattfindenden virtuellen Treffens mit anderen, dazu ebenfalls mit einer VR-Einrichtung ausgestatteten Nutzern/Teilnehmern ist. Bei einem solchen virtuellen Treffen sind andere Teilnehmer für einen jeweiligen Teilnehmer in virtueller Form, nämlich als Avatar, an der von ihm getragenen VR-Brille oder AR-Brille wahrnehmbar. In dem virtuellen Raum dargebotene, mit einem Präferenzkennzeichen versehene Informationen werden dabei für alle das Verfahren nutzenden, wie gesagt, mit einer VR-Einrichtung und einer elektronischen Brille ausgestatteten Teilnehmer durch die Avatare anderer Teilnehmer und/oder durch virtuelle Objekte, welche mit einem Präferenzkennzeichen versehene Informationen verdecken, hindurch sichtbar gemacht. Hierbei wird die den virtuellen Raum mit den darin darzubietenden Informationen generierende Programmanwendung durch eine zentrale computerbasierte Einrichtung, respektive durch einen in Bezug auf alle Teilnehmer zentral oder bei einem der Teilnehmer angeordneten Server, verarbeitet.

Bei dieser Verfahrensgestaltung wird die für einen Teilnehmer aus seiner jeweiligen augenblicklichen Position in dem virtuellen Raum jeweils resultierende Ansicht dieses Raumes mit den darin befindlichen Entitäten und dargebotenen Informationen fortwährend neu berechnet. Die Berechnung der die aktuelle Ansicht des virtuellen Raumes für einen jeweiligen Nutzer repräsentierenden Daten könnte hierbei durch die schon erwähnte zentral lokalisierte computertechnische Einrichtung erfolgen. Von der betreffenden Einrichtung (beispielsweise Server) würden dann die berechneten Daten an die VR-Einrichtungen der einzelnen Teilnehmer des virtuellen Treffens zur weiteren Verarbeitung, das heißt insbesondere zur Visualisierung, über Datenverbindungen in einem den Server und die VR-Einrichtungen umfassenden Kommunikationsnetz übertragen.

Allerdings wäre eine derartige Vorgehensweise insoweit nachteilig, als sie die Übertragung großer Datenmengen erforderlich macht. Vorzugsweise erfolgt daher die Berechnung einer aus Bewegungen eine Nutzers/Teilnehmers für ihn resultierenden veränderten aktuellen Ansicht des virtuellen Raumes, also die solchermaßen bedingte fortwährende Aktualisierung der Ansicht des virtuellen Raumes mit den darin dargebotenen Informationen, durch die VR-Einrichtung des betreffenden Nutzers selbst. Das heißt Daten zu einer initialen Ansicht des für das virtuelle Treffen genutzten virtuellen Raumes werden durch zentrale computertechnische Einrichtung berechnet und an die VR-Einrichtungen aller teilnehmenden Nutzer zur visuellen Umsetzung durch deren elektronische Brillen übermittelt.

Entsprechendes gilt aber aus der Sicht des einzelnen Teilnehmers/Nutzers auch für solche Veränderungen der Ansicht des virtuellen Raumes, die nicht aus einer Bewegung des betreffenden Nutzers selbst resultieren. Zu denken ist hierbei an allgemeine Änderungen des Szenarios (zum Beispiel auch Darbietung neuer Informationen), an Bewegungen anderer Teilnehmer oder an ein Verlassen des virtuellen Treffens durch einen oder mehrere Teilnehmer oder an neu hinzukommende Teilnehmer. Hingegen werden Veränderungen der Raumansicht, welche aus der Bewegung eines Nutzers (mit gegebenenfalls Veränderung seiner Position im Raum) für ihn selbst resultieren, bei der letztgenannten, bevorzugten Ausgestaltung des Verfahrens, durch seine eigene VR-Einrichtung berechnet.

Der Umstand, wonach in dem virtuellen Raum dargebotene, mit einem Präferenzkennzeichen versehene Informationen im Falle dessen, dass sie durch eine weitere sich in dem virtuellen Raum befindende virtuelle Entität (zum Beispiel virtuelles Objekt oder Avatar eines anderen Teilnehmers) verdeckt werden, durch die betreffende virtuelle Entität hindurch für einen Nutzer des Verfahrens erfassbar gemacht werden, kann auf unterschiedliche Weise realisiert werden. Eine Möglichkeit besteht darin, dass eine mit einem Präferenzkennzeichen versehene Informationen verdeckende virtuelle Entität durch die elektronische Brille des Nutzers für den betreffenden Nutzer vollständig transparent gemacht wird, wobei die ansonsten transparente Entität von einer dünnen Konturlinie umgeben sein kann. Möglich ist es aber auch, dass eine solche, mit einem Präferenzkennzeichen versehene Informationen verdeckende Entität für den Nutzer des Verfahrens und Träger der elektronischen Brille semitransparent visualisiert wird, so dass die präferierten Informationen durch die virtuelle Entität hindurchscheinen.

Was die weiter oben angesprochene Übergabe von Parametern anbelangt, aufgrund welcher ausgewählte Informationen mit einem Präferenzkennzeichen verknüpft, respektive versehen werden, so sind je nach Implementierung des Verfahrens auch hierfür unterschiedliche Möglichkeiten denkbar. Eine dieser Möglichkeiten besteht darin, dass ein jeweiliger Nutzer selbst entscheidet, welche Informationen für ihn wichtig und daher, unabhängig von einer eventuellen Verdeckung durch andere sich in dem virtuellen Raum befindende virtuelle Entitäten, für ihn (und eventuell auch für andere Nutzer) stets sichtbar sein sollen. Es kann demnach vorgesehen sein, dass der Nutzer an die von der computertechnischen Einrichtung ausgeführte Programmanwendung in einem Setup-Modus dieser Programmanwendung entsprechende Parameter im Rahmen eines sich auf ihn beziehenden Konfigurationsvorgangs übergibt, zu deren Art nachfolgend noch Ausführungen gegeben werden sollen.

Eine andere Möglichkeit, welche insbesondere im Zusammenhang mit der Durchführung virtueller Treffen in einem virtuellen Raum in Betracht kommt, bei welcher der virtuelle Raum und die sich darin befindenden virtuellen Entitäten sowie darzubietenden Informationen durch eine Programmanwendung generiert werden, die durch eine zentrale computertechnische Einrichtung, wie beispielsweise einen Server, ausgeführt wird, besteht darin, dass entsprechende Parameter durch einen Administrator in einem Setup-Modus an die zentral auf dem Server ausgeführte Programmanwendung übergeben werden.

Bei den insoweit unabhängig vom Ort ihrer Ausführung an die Programmanwendung zur Verknüpfung von Informationen mit einem Präferenzkennzeichen zu übergebenden Parametern kann es sich beispielsweise um eindeutige Objektbezeichnungen handeln, welche die betreffenden Informationen eindeutig spezifizieren. Zu denken wäre hierbei zum Beispiel an ein Objektbezeichnung "Whiteboard" für den Teilnehmern eines virtuellen Treffens auf einem solchen (selbstverständlich ebenfalls virtuellen) Whiteboard präsentierte Informationen. Eine andere Möglichkeit besteht darin, dass entsprechende Informationen durch Angabe ihrer Koordinaten in dem virtuellen Raum spezifiziert werden.

Entsprechend einer möglichen Weiterbildung des vorgeschlagenen Verfahrens kann es darüber hinaus vorgesehen sein, dass durch den Nutzer oder den Administrator, welcher auch die Parameter zur Verknüpfung von Informationen mit einem Präferenzkennzeichen an die Programmanwendung übergibt, im Setup-Modus dieser Programmanwendung bestimmten, sich in dem virtuellen Raum befindenden virtuellen Entitäten ein Sondervorrang gegenüber den mit einem Präferenzkennzeichen versehenen Informationen eingeräumt werden kann. Derartige, mit einem solchen Sondervorrang versehene virtuelle Entitäten werden hierbei auch dann nicht transparent oder semitransparent dargestellt, wenn sie mit einem Präferenzkennzeichen versehene Informationen teilweise oder vollständig verdecken. Entsprechendes kann aus der Sicht eines Nutzers zum Beispiel sinnvoll sein, wenn es der Nutzer für unerlässlich hält, diese virtuellen Entitäten, so beispielsweise auch andere Teilnehmer an einem virtuellen Treffen, in jedem Falle sichtbar zu halten, um sich während der Nutzung des virtuellen Raumes ein realitätsnahes Nutzungserlebnis zu bewahren.

Den zuvor dargelegten verfahrenstechnischen Aspekten der Lösung entsprechend, umfasst das vorgeschlagene, zur Durchführung des Verfahrens geeignete System eine computertechnische Einrichtung mit einer von dieser verarbeiteten, den virtuellen Raum generierenden Programmanwendung und mindestens eine von dem Nutzer des virtuellen Raumes getragene elektronische Brille, welche eine VR-Einrichtung des Nutzers oder einen Teil davon ausbildet. Bei dieser elektronischen Brille handelt es sich, wie bereits ausgeführt, um eine VR-Brille oder um eine AR-Brille, durch welche der von der computertechnischen Einrichtung generierte virtuelle Raum mit den sich darin befindenden virtuellen Entitäten und dargebotenen Informationen für den Nutzer visualisiert wird.

Die vorgenannte computertechnische Einrichtung ist dabei durch die Verarbeitung der implementierten Programmanwendung dazu ausgebildet, Parameter entgegenzunehmen, durch welche in dem virtuellen Raum dargebotene Informationen mit einem Präferenzkennzeichen verknüpft werden. Die VR-Einrichtung eines Nutzers, respektive des Nutzers, ist dazu ausgebildet, durch Auswertung von der computertechnische Einrichtung dazu entgegengenommener Daten in dem virtuellen Raum dargebotene Informationen, welche mit einem Präferenzkennzeichen verknüpft sind, für den Nutzer mit Hilfe seiner elektronischen Brille auch dann erfassbar zu machen, wenn die entsprechend gekennzeichneten Informationen für den Nutzer aufgrund seiner augenblicklichen Position in dem virtuellen Raum eigentlich teilweise oder vollständig durch eine sich darin befindende virtuelle Entität verdeckt sind. Hierzu sind die VR-Einrichtung und die zugehörige elektronische Brille vorzugsweise dazu ausgebildet, Entitäten, welche mit einem Präferenzkennzeichen versehene Informationen aus der Sicht ihres Nutzers zumindest teilweise verdecken, transparent oder semitransparent darzustellen.

Das Verfahren kann, wie ebenfalls bereits ausgeführt, zur Verwendung durch einen einzelnen Nutzer oder durch mehrere, ein virtuelles Treffen durchführende Nutzer dazu eingerichet, das heißt implementiert sein. Insbesondere im Falle der Herrichtung zur Verwendung durch nur einen Nutzer können dabei die computertechnische, den virtuellen Raum durch Ausführung einer dafür geeigneten Programmanwendung generierende Einrichtung und die VR-Einrichtung des Nutzers als gemeinsame Einrichtung ausgebildet sein. Davon abweichend ist es aber bevorzugt, dass die den virtuellen Raum generierende computertechnische Einrichtung mit der implementierten, von ihr verarbeiteten Programmanwendung innerhalb des Systems an zentraler Stelle vorgesehen ist. Es handelt sich hierbei dann um einen durch eine administrative Instanz oder durch eine dazu beauftragte Fachkraft (Administrator) betriebenen Server.

Dieser Server, der im letztgenannten Fall, durch entsprechende Implementierung der bereits im Rahmen des Verfahrens angesprochenen Programmanwendung, dazu ausgebildet ist, einen virtuellen Raum für mehrere, jeweils mit einer VR-Einrichtung ausgestattete Teilnehmer eines in diesem virtuellen Raum stattfindenden Treffens zu generieren, interagiert mit den VR-Einrichtungen aller Nutzer, respektive Teilnehmer des virtuellen Treffens. Der Server ist ferner dazu ausgebildet, Daten an die VR-Einrichtungen der Teilnehmer zur Visualisierung durch deren elektronische Brillen über Datenverbindungen, respektive vorzugsweise über ein Kommunikationsnetz, zu übertragen. Hierbei handelt es sich zum einen um Daten zu einer initialen Ansicht des virtuellen Raumes, welche durch den Server an die VR-Einrichtungen aller Teilnehmer übertragen werden. Mit Bezug auf einen jeweiligen Teilnehmer/Nutzer betrifft dies ferner Daten zu Veränderungen der Ansicht des virtuellen Raumes, welche nicht aus einer Bewegung des betreffenden Teilnehmers selbst resultieren und vom Server an die VR-Einrichtung dieses Nutzers übertragen werden. Wie bereits erwähnt, kann es sich hierbei um Daten zu Veränderungen der Ansicht des virtuellen Raumes handeln, welche aus allgemeinen Änderungen des Szenarios, aus Bewegungen anderer Teilnehmer, aus einem Verlassen des virtuellen Treffens durch Teilnehmer oder dergleichen resultieren.

Mit Blick auf die zum Verfahren beschriebene Vorgehensweise zur Erkennung von Entitäten, welche mit einem Präferenzkennzeichen versehene Informationen in Bezug auf einen jeweiligen Nutzer teilweise oder vollständig verdecken, sind die VR-Einrichtungen der Teilnehmer/Nutzer durch Ausstattung mit einer von ihnen verarbeiteten Programmanwendung vorzugsweise zudem zur Berechnung nicht sichtbarer trapezförmiger virtueller Prismen innerhalb des virtuellen Raumes ausgebildet. Ein jeweiliges solches nicht sichtbares Prisma wird dabei von der VR-Einrichtung eines Nutzers zwischen einem, eine mit einem Präferenzkennzeichen versehene Information umgebenden Rechteck oder Quadrat und der Position des betreffenden Nutzers in dem virtuellen Raum gebildet.

Dies bedeutet, je nach Menge und Verteilung der Informationen in dem virtuellen Raum können von der VR-Einrichtung eines jeweiligen Nutzers, respektive Teilnehmers eines virtuellen Treffens auch mehrere solcher trapezförmigen virtuellen Prismen berechnet werden. Entsprechendes erfolgt durch die VR-Einrichtungen anderer Teilnehmer des Treffens, welche von der Möglichkeit Gebrauch machen möchten, bestimmte, sie interessierende, in dem virtuellen Raum dargebotene Informationen unabhängig von ihrer Position im virtuellen Raum immer wahrnehmen zu können.

Nachfolgend sollen in der Art eines Ausführungsbeispiels anhand von Zeichnungen nochmals einige Ausführungen zu Einzelheiten der Erfindung erfolgen. Die hierzu in Bezug genommenen Zeichnungen zeigen im Einzelnen:
- Fig. 1:: ein beispielhaftes Szenario für ein virtuelles Treffen,
- Fig. 2:: eine schematische Darstellung einer möglichen Vorgehensweise zur Detektion mit einem Präferenzkennzeichen versehene Informationen verdeckender Entitäten.

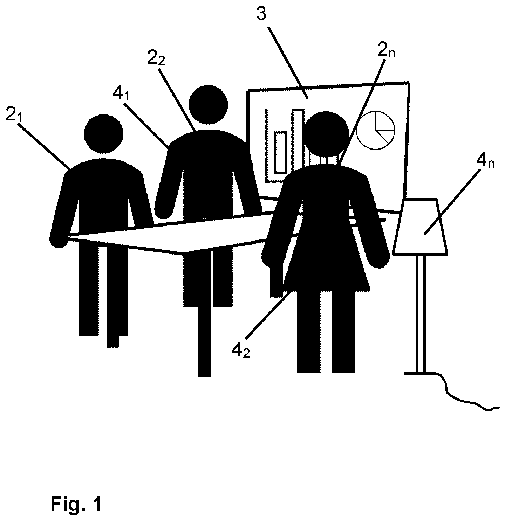

Die Fig. 1 zeigt beispielhaft ein Szenario eines virtuellen Treffens mehrerer Teilnehmer 2₁, 2₂, 2ₙ in einem virtuellen Raum. Zur Teilnahme an dem Treffen verfügt jeder der Nutzer/Teilnehmer 1, 2₁, 2₂, 2ₙ über eine (in der Figur selbst nicht gezeigte) VR-Einrichtung mit einer (ebenfalls nicht dargestellten) elektronischen Brille. Der in der Figur gezeigte virtuelle Raum mit den darin befindlichen Entitäten 2₁, 2₂, 2ₙ, 4ₙ wird durch eine computertechnische Einrichtung, wie einen Server, durch Ausführung einer implementierten Programmanwendung generiert. Den Raum mit den Entitäten 2₁, 2₂, 2ₙ, 4ₙ beschreibende Daten werden durch den Server an die VR-Einrichtungen der einzelnen Nutzer/Teilnehmer 1, 2₁, 2₂, 2ₙ zur Visualisierung an deren elektronischer Brille (VR-Brille oder AR-Brille) übermittelt. Die Fig. 1 zeigt den virtuellen Raum und sich darin befindende Entitäten 2₁, 2₂, 2ₙ, 4ₙ sowie Informationen aus der Sicht eines Nutzers 1, das heißt eines Teilnehmers an dem virtuellen Treffen, welcher typischerweise seinen eigenen Avatar nicht sieht und daher selbst in der Figur nicht dargestellt ist.

In dem dargestellten Szenario befinden sich in dem virtuellen Raum die durch Avatare repräsentierten anderen Teilnehmer 2₁, 2₂, 2ₙ des Treffens sowie virtuelle Objekte, wie eine hier beispielhaft gezeigte Stehlampe (Objekt 4ₙ) und ein Whiteboard, an welchem durch einen der Teilnehmer Informationen 3 für die anderen Teilnehmer dargeboten werden. Hierbei kann es vorkommen, dass die an dem Whiteboard dargebotenen Informationen 3 für einen der Teilnehmer 1, 2₁, 2₂, 2ₙ (an dieser Stelle sei insbesondere wiederum der Nutzer 1 betrachtet) aufgrund seiner aktuellen Position in dem virtuellen Raum durch mindestens eine darin befindliche Entität2 ₁, 2₂, 2ₙ, 4ₙ, also den Avatar eines anderen Teilnehmers 2₁, 2₂, 2ₙ oder durch ein virtuelles Objekt 4ₙ, teilweise verdeckt werden.

Der betreffende Teilnehmer (Nutzer 1) hätte nun die Möglichkeit, sich innerhalb des Raumes virtuell näher an das virtuelle Whiteboard und die darauf dargebotenen Informationen 3 zu bewegen. Allerdings würde er, genauer gesagt sein Avatar, dann möglicherweise diese Informationen für einen oder mehrere der anderen Teilnehmer 2₁, 2₂, 2ₙ teilweise oder vollständig verdecken. Daher ist es gemäß der hier beschriebenen Lösung so, dass die auf dem virtuellen Whiteboard dargebotenen Informationen 3 beispielsweise durch einen Administrator des Treffens und des den virtuellen Raum generierenden Servers zuvor, beispielsweise in einem Setup-Modus der von dem Server verarbeiteten Programmanwendung, durch Übergabe von Parametern an die Programmanwendung, wie beispielsweise von Koordinaten des virtuellen Whiteboards in dem virtuellen Raum, mit einem Präferenzkennzeichen versehen wurden.

Dieses bewirkt, dass die betreffenden Informationen 3 für jeden dies (vorzugsweise ebenfalls aufgrund einer in dem Setup-Modus, respektive in einem persönlichen Konfigurationsmodus, vorgenommenen Konfiguration) wünschenden Teilnehmer (hier sei wiederum der Nutzer 1 als ein Teilnehmer betrachtet) stets sichtbar sind. Die von dem Server (der zentralen computertechnischen Einrichtung) an die VR-Einrichtung eines solchen Nutzers 1 zu dem virtuellen Raum übergebenen Daten sind dabei dergestalt, dass sie bei ihrer Umsetzung durch die VR-Einrichtung bewirken, dass Entitäten 4₁, 4₂, 4ₙ, nämlich Avatare anderer Nutzer oder virtuelle Objekte, welche die mit dem Präferenzkennzeichen versehenen Informationen 3 für den Nutzer 1 zumindest teilweise verdecken, durch die Brille des Nutzers 1 transparent (mit oder ohne Konturlinie) oder semitransparent dargestellt werden.

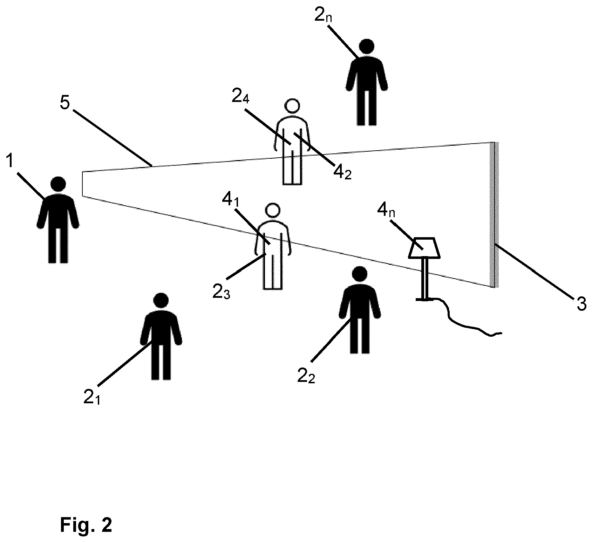

Die Fig. 2 zeigt schematisch eine Möglichkeit der Detektion von virtuellen Entitäten 4₁, 4₂, 4ₙ (nämlich von Avataren an einem virtuellen Treffen teilnehmender anderer Nutzer/Teilnehmer 2₃, 2₄ und einem virtuellen Objekt 4ₙ - hier beispielsweise eine Stehlampe), welche eine mit einem Präferenzkennzeichen versehene, in dem virtuellen Raum des Treffens dargebotene Information 3 verdecken. Hierzu wird zwischen einem diese Informationen 3 umgebenden (gedachten) Quadrat oder Rechteck und der Position eines Nutzers 1, für den die mit dem Präferenzkennzeichen versehenen Informationen 3 stets unbeeinträchtigt wahrnehmbar sein sollen, durch eine von der VR-Einrichtung dieses Nutzers 1 verarbeitete Programmanwendung ein trapezförmiges virtuelles Prisma 5 berechnet.

Das Schema der Fig. 2 dient lediglich zur Erläuterung und veranschaulicht hierbei, abweichend von der Fig. 1 nicht einen virtuellen Raum und ein konkretes darin gegebenes Szenario. Dies gilt zumal der Nutzer 1, für welchen in dem gezeigten Schema ein von mit einem Präferenzkennzeichen versehenen Informationen 3 ausgehendes virtuelles Prisma 5 berechnet wird, sich typischerweise selbst nicht sieht.

Aufgrund der Position eines jeweiligen Nutzers 1 und der bekannten Position der mit dem Präferenzkennzeichen versehenen Informationen 3 sowie der bekannten Positionen aller weiteren sich in dem virtuellen Raum befindenden Entitäten 2₁, 2₂, ... 2ₙ, 4ₙ kann durch die VR-Einrichtung des betreffenden Nutzers 1, respektive durch die von dieser verarbeitete Programmanwendung bestimmt werden, welche der vorgenannten Entitäten (hier 4₁, 4₂, 4ₙ) eventuell die mit dem Präferenzkennzeichen versehenen Informationen 3 für den Nutzer 1 verdecken. Daten zur aktuellen, sich für den Nutzer 1 aufgrund seiner Position in dem virtuellen Raum ergebenden Ansicht des Raumes sowie der sich darin befindenden Entitäten 2₁, 2₂, ... 2ₙ, 4ₙ und Informationen werden zusammen mit Daten über eventuell bezüglich der präferierten Informationen 3 bestehende Verdeckungssituationen von der VR-Einrichtung eines jeweiligen Nutzers 1 an seine elektronische Brille übergeben. Ihre Verarbeitung bewirkt, dass präferierte Informationen 3 verdeckende Entitäten 4₁, 4₂, 4ₙ für den Nutzer 1 an seiner elektronischen Brille in transparenter oder semitransparenter Form (angedeutet durch ihre nicht schwarz ausgefüllte Körperfläche) visualisiert werden.

## Patentansprüche

1. Verfahren zur Verbesserung der Nutzbarkeit eines virtuellen Raumes im Hinblick auf die einem sich in dem virtuellen Raum bewegenden Nutzer (1) ermöglichte Erfassung von Informationen (3), welche dem sich zusammen mit zumindest einer durch ihn wahrnehmbaren, bewegten oder unbewegten virtuellen Entität (2₁, 2₂ ... 2ₙ, 4₁, 4₂ ... 4ₙ) gemeinsam in dem virtuellen Raum befindenden Nutzer (1) in dem virtuellen Raum dargeboten werden, wobei der virtuelle Raum und die darin darzubietenden Informationen (3) durch eine computertechnische Einrichtung und eine von dieser verarbeitete Programmanwendung generiert, an eine VR-Einrichtung des Nutzers (1) übergeben sowie für den Nutzer (1) visualisiert werden durch eine von dem Nutzer (1) getragene elektronische Brille, nämlich durch eine VR₋Brille oder eine AR-Brille, welche die VR-Einrichtung ausbildet oder von dieser umfasst ist, **dadurch gekennzeichnet, dass** ausgewählte, in dem virtuellen Raum dargebotene Informationen (3) durch Übergabe entsprechender Parameter an die von der computertechnischen Einrichtung verarbeitete Programmanwendung mit einem Präferenzkennzeichen verknüpft werden und dass eine jeweilige, mit einem Präferenzkennzeichen verknüpfte sowie für den Nutzer (1) aufgrund seiner aktuellen virtuellen Position in dem virtuellen Raum von mindestens einer sich innerhalb des virtuellen Raumes befindenden virtuellen Entität (4₁, 4₂ ... 4ₙ) teilweise oder vollständig verdeckte Information (3), durch die mindestens eine sie verdeckende virtuelle Entität (4₁, 4₂ ... 4ₙ) hindurch erfassbar ist, indem durch eine von der VR-Einrichtung des Nutzers (1) verarbeitete Programmanwendung zwischen einem, diese Information (3) umgebenden Rechteck oder Quadrat und der aktuellen Position des Nutzers (1) ein nicht sichtbares trapezförmiges virtuelles Prisma (5) erzeugt und die mindestens eine sich in diesem trapezförmigen Prisma befindende virtuelle Entität (4₁, 4₂ ... 4ₙ) durch die elektronische Brille des Nutzers (1) für diesen vollständig transparent oder semitransparent visualisiert wird, wobei das virtuelle Prisma (5) und Daten zu darin detektierten virtuellen Entitäten (4₁, 4₂ ... 4ₙ) fortwährend an die jeweils aktuelle Position des Nutzers (1) in dem virtuellen Raum angepasst werden.

2. Verfahren nach Anspruch 1, wobei die den virtuellen Raum mit den darin darzubietenden Informationen (3) generierende Programmanwendung durch eine zentrale computerbasierte Einrichtung verarbeitet wird, **dadurch gekennzeichnet, dass** der Nutzer (1) Teilnehmer eines in dem virtuellen Raum stattfindenden virtuellen Treffens ist, für dessen jeweils mit einer VR-Einrichtung ausgestattete Teilnehmer (1, 2₁, 2₂, ... 2ₙ) andere Teilnehmer (2₁, 2₂, ... 2ₙ) des Treffens in virtueller Form, nämlich als Avatar, an einer von ihnen getragenen VR-Brille oder AR-Brille visualisiert werden und dass in dem virtuellen Raum dargebotene, mit einem Präferenzkennzeichen versehene Informationen (3) für das Verfahren nutzende Teilnehmer (1, 2₁, 2₂, ... 2ₙ) durch diese Informationen verdeckende Entitäten (4₁, 4₂ ... 4ₙ), wie Avatare (4₁, 4₂) anderer Teilnehmer (2₁, 2₂, ... 2ₙ) hindurch sichtbar sind, wobei die für einen jeweiligen Teilnehmer (1, 2₁, 2₂, ... 2ₙ) aus seiner augenblicklichen Position in dem virtuellen Raum jeweils resultierende Ansicht des virtuellen Raumes mit den darin befindlichen Entitäten und dargebotenen Informationen fortwährend neu berechnet und an der elektronischen Brille dieses Teilnehmers (1, 2₁, 2₂, ... 2ₙ) visualisiert wird.

3. Verfahren nach Anspruch 1 oder 2, **dadurch gekennzeichnet, dass** der virtuelle Raum von der als AR-Brille ausgebildeten elektronischen Brille des Nutzers (1) für ihn als Teil einer erweiterten Realität visualisiert wird.

4. Verfahren nach einem der Ansprüche 1 bis 3, **dadurch gekennzeichnet, dass** eine sich in dem virtuellen Raum befindende virtuelle Entität (4₁, 4₂ ... 4ₙ), welche eine mit einem Präferenzkennzeichen versehene Information (3) für den Nutzer (1) teilweise oder vollständig verdeckt, durch die elektronische Brille des Nutzers (1) für diesen vollständig transparent, mit einer diese Entität (4₁, 4₂ ... 4ₙ) umgebenden oder ohne eine sie umgebende Konturlinie, visualisiert wird.

5. Verfahren nach einem der Ansprüche 1 bis 4, **dadurch gekennzeichnet, dass** ausgewählte, in dem virtuellen Raum darzubietende Informationen (3) durch den Nutzer (1) in einem Setupmodus der den virtuellen Raum und die Informationen (3) generierenden Programmanwendung mit einem Präferenzkennzeichen verknüpfbar sind.

6. Verfahren nach einem der Ansprüche 1 bis 4, **dadurch gekennzeichnet, dass** ausgewählte, in dem virtuellen Raum darzubietende Informationen (3) in einem Setupmodus der den virtuellen Raum und die Informationen (3) generierenden Programmanwendung durch einen Administrator mit einem Präferenzkennzeichen verknüpfbar sind.

7. Verfahren nach Anspruch 5 oder 6, **dadurch gekennzeichnet, dass** mit einem Präferenzkennzeichen zu verknüpfende Informationen (3) durch den Nutzer (1) oder den Administrator durch Angabe einer ihnen von der Programmanwendung zugewiesenen eindeutigen Objektbezeichnung spezifiziert werden.

8. Verfahren nach Anspruch 5 oder 6, **dadurch gekennzeichnet, dass** mit einem Präferenzkennzeichen zu verknüpfende Informationen (3) durch den Nutzer (1) oder den Administrator durch Angabe ihrer Koordinaten in dem virtuellen Raum spezifiziert werden.

9. Verfahren nach Anspruch 7 oder 8, **dadurch gekennzeichnet, dass** in dem virtuellen Raum befindlichen Entitäten im Setupmodus der Programmanwendung durch den Nutzer (1) oder den Administrator ein Sondervorrang gegenüber den mit einem Präferenzkennzeichen versehenen Informationen eingeräumt werden kann, so dass auch die mit einem Präferenzkennzeichen versehenen Informationen (3) durch diese Entitäten hindurch für den Nutzer (1) nicht erfassbar sind.

10. System zur Verbesserung der Nutzbarkeit eines virtuellen Raumes im Hinblick auf die einem sich in dem virtuellen Raum bewegenden Nutzer (1) ermöglichte Erfassung ihm in dem virtuellen Raum dargebotener Informationen (3), umfassend eine computertechnische Einrichtung mit einer von dieser verarbeiteten, den virtuellen Raum generierenden Programmanwendung und mit mindestens einer von dem Nutzer (1) getragenen, eine VR-Einrichtung ausbildenden oder von einer solchen umfassten elektronischen Brille zur Visualisierung virtuellen Raumes, bei welcher es sich um eine VR-Brille oder um eine AR-Brille handelt, wobei sich in dem von der computertechnischen Einrichtung generierten, an die elektronische Brille übergebenen sowie von dieser für den Nutzer (1) visualisierten virtuellen Raum mit den darin dargebotenen Informationen (3) mindestens eine durch den Nutzer (1) wahrnehmbare bewegte oder unbewegte virtuelle Entität befindet, **dadurch gekennzeichnet, dass**
a.) die computertechnische Einrichtung durch die Verarbeitung der implementierten Programmanwendung dazu ausgebildet ist, Parameter entgegenzunehmen, durch welche in dem virtuellen Raum dargebotene Informationen (3) mit einem Präferenzkennzeichen verknüpft werden,
b.) die VR-Einrichtung durch die Ausstattung mit einer von ihr verarbeiteten Programmanwendung dazu ausgebildet ist, durch Auswertung von der computertechnischen Einrichtung dazu entgegengenommener Daten, zwischen einem, eine jeweilige in dem virtuellen Raum dargebotene, mit einem Präferenzkennzeichen verknüpfte Information (3) umgebenden Rechteck oder Quadrat und der aktuellen Position des Nutzers (1) ein nicht sichtbares trapezförmiges virtuelles Prisma (5) zu erzeugen sowie eine sich in diesem virtuellen Prisma (5) befindende und demnach die Information (3) teilweise oder vollständig verdeckende virtuelle Entität (4₁, 4₂ ... 4ₙ) für den Nutzer (1) an der elektronischen Brille vollständig transparent oder semitransparent zu visualisieren.

11. System nach Anspruch 10, **dadurch gekennzeichnet, dass** es sich bei der computertechnischen Einrichtung um eine zentrale Einrichtung handelt, nämlich um einen Server, welcher durch die Verarbeitung der implementierten Programmanwendung dazu ausgebildet ist, eine initiale Ansicht des virtuellen Raumes für mehrere, jeweils mit einer VR-Einrichtung ausgestattete Teilnehmer (1, 2₁, 2₂, ... 2ₙ) eines in diesem virtuellen Raum stattfindenden Treffens zu generieren und Daten an die VR-Einrichtungen der Teilnehmer (1, 2₁, 2₂, ... 2ₙ) zur Visualisierung durch deren elektronische Brillen zu übertragen, nämlich Daten zur initialen Ansicht des virtuellen Raumes an die VR-Einrichtungen aller Teilnehmer (1, 2₁, 2₂, ... 2ₙ) und an die VR-Einrichtung eines jeweiligen Teilnehmers (1, 2₁, 2₂, ... 2ₙ) zumindest Daten zu Veränderungen der Ansicht des virtuellen Raumes, welche nicht aus einer Bewegung des jeweiligen Teilnehmers (1, 2₁, 2₂, ... 2ₙ) selbst resultieren.

## Claims

1. Method for improving the usability of a virtual space with regard to the acquisition of information (3) enabled for a user (1) moving in the virtual space, which information is presented in the virtual space to the user (1) who is present in the virtual space together with at least one moving or stationary virtual entity (2₁, 2₂... 2ₙ, 4₁, 4₂... 4ₙ) perceivable by said user, wherein the virtual space and the information (3) to be presented therein are generated by a computer system and a program application processed by it, transferred to a VR device of the user (1), and visualized for the user (1) by electronic glasses worn by the user (1), namely by VR glasses or AR glasses, which constitute the VR device or are comprised by it, **characterized in that** selected information presented in the virtual space (3) is linked to a preference identifier by transferring corresponding parameters to the program application processed by the computer system, and **in that** respective information (3) linked to a preference identifier and partially or completely obscured for the user (1) due to their current virtual position in the virtual space by at least one virtual entity (4₁, 4₂... 4ₙ) located within the virtual space is perceivable through the at least one virtual entity (4₁, 4₂... 4ₙ) obscuring it, such that an invisible trapezoidal virtual prism (5) is generated, by a program application processed by the VR device of the user (1), between a rectangle or square surrounding said information (3) and the current position of the user (1), and the at least one virtual entity (4₁, 4₂... 4ₙ) located in this trapezoidal prism is visualized as completely transparent or semi-transparent to said user through the electronic glasses of the user (1), wherein the virtual prism (5) and data regarding detected virtual entities (4₁, 4₂... 4ₙ) are continuously adapted to the current position of the user (1) in the virtual space.

2. Method according to claim 1, wherein the program application generating the virtual space with the information (3) to be presented therein is processed by a central computer-based device, **characterized in that** the user (1) is a participant in a virtual meeting taking place in the virtual space, for whose participants (1, 2₁, 2₂, ... 2ₙ), each equipped with a VR device, other participants (2₁, 2₂, ... 2ₙ) are visualized in virtual form, namely as avatars, on VR or AR glasses worn by them, and **in that** information (3) presented in the virtual space and provided with a preference identifier is visible to participants (1, 2₁, 2₂, ... 2ₙ) using the method through entities (4₁, 4₂... 4ₙ) obstructing this information, such as avatars (4₁, 4₂) of other participants (2₁, 2₂, ... 2ₙ), wherein the respective view of the virtual space resulting for a respective participant (1, 2₁, 2₂, ... 2ₙ) from their current position in the virtual space, including the entities located therein and presented information, is continuously recalculated and visualized on the electronic glasses of this participant (1, 2₁, 2₂, ... 2ₙ).

3. Method according to claim 1 or 2, **characterized in that** the virtual space is visualized for the user (1) as part of an augmented reality by the electronic glasses of said user, which are designed as AR glasses.

4. Method according to one of claims 1 to 3, **characterized in that** a virtual entity (4₁, 4₂... 4ₙ) located in the virtual space, which partially or completely obscures information (3) marked with a preference identifier for the user (1), is visualized by the electronic glasses of the user (1) as completely transparent to the user, either with a contour line surrounding said entity (4₁, 4₂... 4ₙ) or without such a contour line.

5. Method according to one of claims 1 to 4, **characterized in that** selected information (3) to be presented in the virtual space can be linked by the user (1) to a preference identifier in a setup mode of the program application generating the virtual space and the information (3).

6. Method according to one of claims 1 to 4, **characterized in that** selected information (3) to be presented in the virtual space can be linked by an administrator to a preference identifier in a setup mode of the program application generating the virtual space and the information (3).

7. Method according to claim 5 or 6, **characterized in that** information (3) to be linked to a preference identifier is specified by the user (1) or the administrator by providing a unique object identifier assigned to it by the program application.

8. Method according to claim 5 or 6, **characterized in that** information (3) to be linked to a preference identifier is specified by the user (1) or the administrator by providing its coordinates in the virtual space.

9. Method according to claim 7 or 8, **characterized in that** entities located in the virtual space may be granted special priority over the information marked with a preference identifier by the user (1) or the administrator in the setup mode of the program application, such that even the information (3) marked with a preference identifier is not perceivable by the user (1) through these entities.

10. System for improving the usability of a virtual space with regard to the ability of a user (1) moving within the virtual space to perceive information (3) presented to him in the virtual space, comprising a computer system with a program application processed by it that generates the virtual space, and having at least one electronic pair of glasses worn by the user (1), which forms a VR device or is comprised by such a VR device, for visualizing the virtual space, which is either VR glasses or AR glasses, wherein the virtual space generated by the computer system, transmitted to the electronic glasses, and visualized by them for the user (1), together with the information (3) presented therein, contains at least one moving or stationary virtual entity perceivable by the user (1), **characterized in that**
a.) the computer system is configured, through the processing of the implemented program application, to receive parameters that link information (3) displayed in the virtual space to a preference identifier,
b.) the VR device, by being equipped with a program application processed by said VR device, is configured to generate-by evaluating data received for this purpose by the computer system-an invisible trapezoidal virtual prism (5) between a rectangle or square surrounding respective information (3) presented in the virtual space and linked to a preference identifier, and the current position of the user (1), and to visualize a virtual entity (4₁, 4₂ ... 4ₙ) located in this virtual prism (5) and thus partially or completely obstructing the information (3), as completely transparent or semi-transparent to the user (1) on the electronic glasses.

11. System according to claim 10, **characterized in that** the computer system is a central device, namely a server, which is configured, by processing the implemented program application, to generate an initial view of the virtual space for a plurality of participants (1, 2₁, 2₂, ... 2ₙ) of a meeting taking place in said virtual space, each participant being equipped with a VR device, and to transmit data to the VR devices of the participants (1, 2₁, 2₂, ... 2ₙ) for visualization through their electronic glasses, namely, data regarding the initial view of the virtual space to the VR devices of all participants (1, 2₁, 2₂, ... 2ₙ), and, to the VR device of a respective participant (1, 2₁, 2₂, ... 2ₙ), at least data regarding changes to the view of the virtual space that do not result from a movement of the respective participant (1, 2₁, 2₂, ... 2ₙ) themselves.

## Revendications

1. Procédé pour améliorer la capacité d'utilisation d'un espace virtuel en termes de la possibilité permise à un utilisateur (1) se déplaçant dans l'espace virtuel d'acquérir des informations (3) qui sont présentées dans l'espace virtuel à l'utilisateur (1) qui se trouve dans l'espace virtuel en même temps qu'au moins une entité virtuelle (2₁, 2₂, ... 2ₙ, 4₁, 4₂, ... 4ₙ) en mouvement ou immobile qu'il perçoit, dans lequel l'espace virtuel et les informations (3) qui doivent être présentées dans celui-ci sont générés par un dispositif informatique et une application de programme exécutée par celle-ci, transmis à un dispositif de réalité virtuelle de l'utilisateur (1) et visualisés pour l'utilisateur (1) à l'aide de lunettes électroniques portées par l'utilisateur (1), à savoir de lunettes de réalité virtuelle ou de lunettes de réalité augmentée qui constituent le dispositif de réalité virtuelle ou sont incluses dans celui-ci, **caractérisé en ce que** des informations (3) choisies présentées dans l'espace virtuel sont associées à une marque de préférence par la transmission de paramètres correspondants à l'application de programme exécutée par le dispositif informatique et **en ce qu'**une information (3) respective associée à une marque de préférence et partiellement ou complètement occultée pour l'utilisateur (1), du fait de la position virtuelle actuelle de celui-ci dans l'espace virtuel, par au moins une entité virtuelle (4₁, 4₂, ... 4ₙ) qui se trouve à l'intérieur de l'espace virtuel peut être acquise à travers l'au moins une entité virtuelle (4₁, 4₂, ... 4ₙ) qui l'occulte par le fait qu'une application de programme exécutée par le dispositif de réalité virtuelle de l'utilisateur (1) crée entre un rectangle ou un carré entourant cette information (3) et la position actuelle de l'utilisateur (1) un prisme virtuel (5) trapézoïdal invisible et l'au moins une entité virtuelle (4₁, 4₂, ... 4ₙ) qui se trouve dans ce prisme trapézoïdal est visualisée par les lunettes électroniques de l'utilisateur (1) comme étant complètement transparente ou semi-transparente pour celui-ci, le prisme virtuel (5) et les données d'entités (4₁, 4₂, ... 4ₙ) détectées par celui-ci étant adaptés de façon continue à la position actuelle de l'utilisateur (1) dans l'espace virtuel.

2. Procédé selon la revendication 1, dans lequel l'application de programme générant l'espace virtuel avec les informations (3) qui doivent être présentées dans celui-ci est exécutée par un dispositif informatique central, **caractérisé en ce que** l'utilisateur (1) est un participant d'une réunion virtuelle qui se tient dans l'espace virtuel, dans laquelle sont visualisés pour des participants (1, 2₁, 2₂, ... 2ₙ) équipés chacun d'un dispositif de réalité virtuelle, sous forme virtuelle, à savoir sous forme d'avatar, sur des lunettes de réalité virtuelle ou de réalité augmentée qu'ils portent, d'autres participants (2₁, 2₂, ... 2ₙ) à la réunion, et **en ce que** des informations (3) présentées dans l'espace virtuel et dotées d'une marque de préférence sont visibles pour des participants (1, 2₁,2₂, ... 2ₙ) utilisant le procédé à travers des entités (4₁, 4₂, ... 4ₙ) qui occultent ces informations, telles que les avatars (4₁, 4₂) d'autres participants (2₁, 2₂, ... 2ₙ), la vue ainsi obtenue de l'espace virtuel avec les entités qui s'y trouvent et les informations présentées pour un participant (1, 2₁, 2₂, ... 2ₙ) donné depuis la position instantanée de celui-ci dans l'espace virtuel étant recalculée de façon continue et visualisée sur les lunettes électroniques de ce participant (1, 2₁, 2₂, ... 2ₙ).

3. Procédé selon la revendication 1 ou 2, **caractérisé en ce que** l'espace virtuel est visualisé pour l'utilisateur (1) par les lunettes électroniques de celui-ci, conçues comme des lunettes de réalité augmentée, comme une partie d'une réalité augmentée.

4. Procédé selon l'une des revendications 1 à 3, **caractérisé en ce qu'**une entité virtuelle (4₁, 4₂, ... 4ₙ) présente dans l'espace virtuel qui occulte entièrement ou complètement pour l'utilisateur (1) une information (3) dotée d'une marque de préférence est visualisée par les lunettes électroniques de l'utilisateur (1) comme étant complètement transparente pour celui-ci, avec un trait de contour entourant cette entité (4₁, 4₂, ... 4ₙ) ou sans trait de contour.

5. Procédé selon l'une des revendications 1 à 4, **caractérisé en ce que** des informations (3) choisies devant être affichées dans l'espace virtuel peuvent être associées par l'utilisateur (1) à une marque de préférence dans un mode de configuration de l'application de programme générant l'espace virtuel et les informations (3).

6. Procédé selon l'une des revendications 1 à 4, **caractérisé en ce que** des informations (3) choisies devant être affichées dans l'espace virtuel peuvent être associées par un administrateur à une marque de préférence dans un mode de configuration de l'application de programme générant l'espace virtuel et les informations (3).

7. Procédé selon la revendication 5 ou 6, **caractérisé en ce que** des informations (3) devant être associées à une marque de préférence peuvent être spécifiées par l'utilisateur (1) ou l'administrateur par l'indication d'une désignation d'objet sans équivoque qui leur est assignée par l'application de programme.

8. Procédé selon la revendication 5 ou 6, **caractérisé en ce que** des informations (3) devant être associées à une marque de préférence peuvent être spécifiées par l'utilisateur (1) ou l'administrateur par l'indication de leurs coordonnées dans l'espace virtuel.

9. Procédé selon la revendication 7 ou 8, **caractérisé en ce que** l'utilisateur (1) ou l'administrateur peuvent, dans le mode de configuration de l'application de programme, assigner à des entités qui se trouvent dans l'espace virtuel une priorité spéciale sur les informations dotées d'une marque de préférence, de sorte que l'utilisateur (1) ne peut pas acquérir même les informations dotées d'une marque de référence à travers ces entités.

10. Système pour améliorer la capacité d'utilisation d'un espace virtuel en termes de la possibilité permise à un utilisateur (1) se déplaçant dans l'espace virtuel d'acquérir des informations (3) qui lui sont présentées dans l'espace virtuel, comprenant un dispositif informatique avec une application de programme exécutée par celle-ci et générant l'espace virtuel et avec au moins une paire de lunettes électroniques portée par l'utilisateur (1), constituant un dispositif de réalité virtuelle ou faisant partie d'un tel dispositif, pour la visualisation de l'espace virtuel, les lunettes étant des lunettes de réalité virtuelle ou de réalité augmentée, au moins une entité en mouvement ou immobile perceptible par l'utilisateur (1) se trouvant dans l'espace virtuel généré par le dispositif informatique, transmis aux lunettes électroniques et visualisé pour l'utilisateur (1) avec les informations (3) qui y sont présentées, **caractérisé en ce que**
a) le dispositif informatique est conçu pour recevoir, en exécutant l'application de programme implémentée, des paramètres par lesquels des informations (3) présentées dans l'espace virtuel sont associées à une marque de préférence ;
b) le dispositif de réalité virtuelle est conçu, en étant équipé de l'application de programme qu'il exécute, pour générer, par l'analyse de données reçues pour cela par le dispositif informatique, un prisme virtuel (5) trapézoïdal invisible entre un rectangle ou un carré entourant l'information (3) respective présentée dans l'espace virtuel et dotée d'une marque de préférence et la position actuelle de l'utilisateur (1), et pour visualiser une entité virtuelle (4₁, 4₂, ... 4ₙ) qui se trouve dans ce prisme virtuel (5) et ainsi l'information (3) sur les lunettes électroniques comme étant complètement transparente ou semi-transparente pour l'utilisateur (1).

11. Système selon la revendication 10, **caractérisé en ce que** le dispositif informatique est une installation centrale, à savoir un serveur, qui est conçu pour générer, en exécutant l'application de programme implémentée, une vue initiale de l'espace virtuel pour plusieurs participants (1, 2₁, 2₂, ... 2ₙ) à une réunion qui se tient dans cet espace virtuel, équipés chacun d'un dispositif de réalité virtuelle, et transmettre aux dispositifs dispositif de réalité virtuelle des participants (1, 2₁, 2₂, ... 2ₙ) des données à visualiser par leurs lunettes électroniques, à savoir des données concernant la vue initiale de l'espace virtuel sur les dispositifs de réalité virtuelle de tous les participants (1, 2₁, 2₂, ... 2ₙ) et, sur le dispositif de réalité virtuelle de chaque participant (1, 2₁, 2₂, ... 2ₙ), au moins des données sur les changements de la vue de l'espace virtuel qui ne résultent pas d'un mouvement du participant (1, 2₁, 2₂, ... 2ₙ) en question lui-même.
